Europäisches Patentamt

European Patent Office

Office européen des brevets

(19)

(11) Veröffentlichungsnummer: **0 526 874 A2**

# (12) EUROPÄISCHE PATENTANMELDUNG

(21) Anmeldenummer: **92113265.0**

(51) Int. Cl.5: **H02J 7/10**

(22) Anmeldetag: **04.08.92**

(30) Priorität: **05.08.91 DE 4125825**

(43) Veröffentlichungstag der Anmeldung:
**10.02.93 Patentblatt 93/06**

(84) Benannte Vertragsstaaten:
**AT BE CH DE DK ES FR GB GR IT LI LU MC NL PT SE**

(71) Anmelder: **RAWE ELECTRONIC GmbH**
**Bregenzer Strasse 67-69**
**W-8999 Weiler/Allgäu(DE)**

(72) Erfinder: **Peinecke, Dieter**
**Kapfholzer Weg 3**
**W-8999 Weiler/Allgäu(DE)**

(74) Vertreter: **Riebling, Peter, Dr.-Ing.,**
**Patentanwalt**
**Rennerle 10, Postfach 31 60**
**W-8990 Lindau/B.(DE)**

(54) **Verfahren und Vorrichtung zum Wiederaufladen von aufladbaren Batterien mit einem Ladegerät.**

(57) Ein Verfahren zum Wiederaufladen von aufladbaren Batterien mit einem Ladegerät mißt von Beginn der Ladung aus die Steigung der Ladespannung und bricht die Schnelladung ab, wenn ein Ansteigen der Ladespannung zum Ende der Aufladung hin als Änderung der gemessenen Steigung erfaßt wird.

EP 0 526 874 A2

Ein Verfahren der eingangs genannten Art ist in der Weise bekannt geworden, daß man bei der Aufladung von wiederaufladbaren Batterien (nachfolgend einfach Batterie genannt) das Ladeende in der Weise erkennt, daß man die Temperatur des Batteriesatzes mißt und nach Überschreiten einer bestimmten Temperatur die Ladung abbricht.

Mit dem Wunsch, die Ladezeit zu verkürzen, erhöht sich aber der Aufwand, der im Ladegerät notwendig ist, enorm. Will man eine Schnellstladung der Akkugs vornehmen, so müssen die Akkus sicher vor Überhitzung und Überladung geschützt werden. Diese Aufgabe ist aber von einer analogen Schaltung nur mit enormen Aufwand möglich.

Es ist ein weiteres Verfahren bekannt geworden, bei dem die Batteriespannung (Ladespannung) über die Ladezeit hinweg gemessen wird und es ist hierbei bekannt, daß zum Ende der Ladezeit hin die Spannung abnimmt und in einen Kurvenzweig mit negativer Steilheit übergeht. Bei diesem bekannten Verfahren wird jedoch nicht die Steigung der Ladekurve erfaßt, sondern es wird nur der Abfall der Ladespannung über die Zeit hinweg erfaßt. Sobald ein derartiger Abfall der Ladespannung mit zunehmender Ladezeit erkannt wird, wird das Ladegerät abgeschaltet.

Nachteil dieses bekannten Verfahrens ist, daß die Batterie überladen wird, denn wenn die Ladespannung mit zunehmender Ladezeit abnimmt, ist die Batterie bereits schon überladen, was zu einer Beschädigung der Batterie führen kann.

Ein anderes bekanntes Verfahren lädt stets mit der für die jeweilige Batteriezelle maximal zulässigen Ladespannung und prüft gegen Ende der Ladezeit, ob diese maximal zulässige Zellenspannung erreicht wurde. Sobald diese Zellenspannung erreicht wurde, wird der Ladevorgang abgebrochen. Nachteil dieses Ladeverfahrens ist, daß Alterungserscheinungen der Batteriezelle nicht erkannt werden. Bei alternden Batteriezellen verringert sich die maximal zulässige Zellenspannung, was von dem bekannten Verfahren nicht erkannt wird. Daher ist der Nachteil des bekannten Verfahrens, daß gealterte Batterien mit einer zu hohen Ladespannung aufgeladen werden, was zu einer Überladung führt und damit zu einer Beschädigung des Batteriesatzes.

Der vorliegenden Erfindung liegt die Aufgabe zugrunde, ein Verfahren der eingangs genannten Art zum Laden von wiederaufladbaren Batterien so weiterzubilden, daß diese Batterien auf schonendste Weise aufgeladen werden, daß eine Überladung auf jeden Fall verhindert wird und daß eine Alterung des Batteriesatzes ebenfalls nicht zu einer Überladung dieses Batteriesatzes führt.

Zur Lösung der gestellten Aufgabe ist ein Verfahren nach der Erfindung durch die technische Lehre des Anspruchs 1 gekennzeichnet.

Die Ladespannung wird bei jedem Meßzyklus zweimal gemessen. Einmal mit Ladestrom, einmal ohne Ladestrom.

Aus den Meßwerten berechnet das Programm zwei getrennte Kurvenverläufe, welche jedoch gleichberechtigt das Abschalten der Schnelladung bewirken können.

Es werden aber auch zwei Spannungsmeßverfahren angewandt. Einmal wird die Akkuspannung absolut gemessen, und in einem zweiten Verfahren nur als relative Spannung in bezug auf den vorhergehenden Meßwert ermittelt.

Der Akku wird in zeitgleichen Abständen, welche zwischen 10 sec und mehreren Minuten liegen können, in drei Schritten vermessen.

1. Ladespannung mit Ladestrom
2. Ladespannung ohne Ladestrom
3. Temperatur der Akkus

Wie aus den Zeichnungen zu erkennen ist, ergeben sich damit für den Ladespannungsverlauf quasi zwei Kurven, wenn für die untere Ladekurve eine Interpolation der Meßwerte vorgenommen wird. Mit diesen meßwerten werden nun durch den Mikroprozessor zwei Ableitungen der Ladespannungsfunktion vorgenommen.

Einmal wird ein Steigungsfaktor für den Kurvenverlauf mit eingeschaltetem Laststrom berechnet. Zum zweiten wird ein Steigungsfaktor für den Kurvenverlauf ohne eingeschalteten Laststrom ermittelt. Das Ermitteln erfolgt durch aufsummieren der gemessenen Spannungsänderungen sowie durch die Anzahl der gemessenen Spannungsänderungen.

Als Spannungssteigerungsänderung wird die Differenz zwischen der Durchschnittssteigerung und der momentanen Steigung definiert. Jede Steigungsänderung, welche doppelt so hoch ist wie der berechnete Durchschnitt, wird als positive Steigung gewertet. Folgen zwei positive Steigungsaussagen hintereinander, so wird die negativ-Steigungserkennung verschärft. Wird dreimal hintereinander eine positive Steigung um mehr als das doppelte des Mittelwertes gemessen, so wird die Schnelladung beendet.

Dieser Algorythmus findet auf beide Ladungsspannungskurven Anwendung.

Der Vorteil des Verfahrens besteht darin, daß dem Rechner keine absoluten Werte zur Erkennung der Steigungsänderung vorgegeben werden.

Er erlernt diese gewißermaßen selbst und kann sich dadurch jedem Akku individuell anpassen.

Ergibt die Steigungsmessung dreimal hintereinander negative Werte, so wird die Schnelladung ebenfalls sofort abgebrochen, da von einem vollen Akku ausgegangen werden kann.

Verschärfte negativ-Steigungsmessung: Wurde bereits zweimal ein Meßwert ermittelt, der größer als das doppelte des berechneten Mittelwertes war, und werden dann negative Steigungswerte gemessen, so wird die Schnelladung ebenfalls sofort abgebrochen.

Wie aus den Kurven zu erkennen ist, verlaufen die beiden Ladekurven in weiten Bereichen parallel. Wird nun festgestellt, daß die obere Kurve um den Faktor drei schneller steigt als die Ladekurve ohne Laststrom, so wird dies ebenfalls zum Beenden der Schnelladung führen, da dies auch auf einen bereits vollen Akkupack hinweist.

Hierbei wird es bevorzugt, wenn in einem ersten Verfahrensschritt zunächst die Temperatur des Batteriesatzes erfaßt wird, daß in einem zweiten Verfahrensschritt die Ladung mit einem reduzierten Ladestrom beginnt, was zu einer Neuformierung der Zelle führt, für den Fall, daß der Batteriesatz tiefentladen war, daß in einem dritten Verfahrensschritt der höchst mögliche Ladestrom an den Batteriesatz angelegt wird unter der Voraussetzung, daß die Temperatur im Bereich von etwa + 5° C bis + 60° C liegt, daß in einem weiteren Verfahrensschritt die Steigung der Ladespannung über die Ladezeit hinweg ermittelt wird, daß in einem weiteren Verfahrensschritt eine Steigungsänderung dieser Steigung erfaßt wird, daß bei einem Erkennen einer Steigungsänderung der Ladestrom stufenweise reduziert wird, und daß nach einer gewißen Zeit von z. Z. zwei Minuten die Ladung endgültig abgebrochen wird, und daß nach Beendigung der Ladung lediglich eine Erhaltungsladung stattfindet.

Ein erstes wesentliches Merkmal der vorliegenden Erfindung ist also, daß nach dem Start der Ladung zunächst der Ladestrom reduziert eingeschaltet wird und hierbei gleichzeitig die Temperatur erfaßt wird.

Mit der anfänglichen Reduzierung des Ladestromes wird der Vorteil erreicht, daß ein tiefentladener Batteriesatz nicht sofort mit dem vollen Ladestrom beaufschlagt wird, um eine Beschädigung dieses Batteriesatzes zu vermeiden.

Die Temperaturerfassung bei Beginn der Ladung hat den weiteren Vorteil, daß damit auch z. B. unterkühlte und sogar eingefrorene Batteriesätze erkannt werden können, die dann ebenfalls nicht mit voller Ladung aufgeladen werden, sondern die erst mit einer Formierungsladung soweit aufgeladen werden, daß sie eine Temperatur von mindestens + 5° C erreichen.

Erst nach Erreichen dieser Temperatur wird dann der volle Ladestrom an den aufzuladenden Batteriesatz angelegt.

Ein weiteres wesentliches Merkmal der vorliegenden Erfindung ist, daß nun in dem weiteren Verfahrensschritt nach Einleiten der Ladung eine Steigungsmessung (Messung der Steigung 1) stattfindet, was bedeutet, daß jetzt die bestimmungsgemäße Aufladung (Schnelladung) des Batteriesatzes erfolgt.

Die Dauer einer derartigen Schnelladung hängt von der Kapazität des Batteriesatzes und der erfindungsgemäß hohen Ladefähigkeit des Gerätes ab und kann sich im Bereich von 10 bis 20 Minuten erstrecken. Eine Schnelladezeit von 10 Minuten eines tiefentladenen Batteriesatzes bezieht sich auf einen Batteriesatz mit einer Kapazität von 0,8 Ah.

Daraus ergibt sich, daß mit dem erfindungsgemäßen Verfahren ein schonendes, gleichzeitig aber auch ein schnelles Laden gewährleistet ist.

Es wird nun mit zunehmender Ladezeit immer in bestimmten Impulsbreiten von z. B. 16 Sec. die Steigung (Steigung 1 = anfängliche Steigung) gemessen und solange sich diese Steigung nicht ändert, wird in Impulsen von 16 Sec. Dauer die Schnelladung fortgesetzt.

In einer ersten Ausführungsform der vorliegenden Erfindung ist es deshalb vorgesehen, daß die Schnelladung im Bereich der Steigung 1 impulsweise erfolgt, d. h. es wird für einen Zeitimpuls von 16 Sec. mit einem Ladestrom von z. B. 6 A geladen, dann wird die Aufladung um 0,5 Sec. unterbrochen und es wird nachgemessen, welche Temperatur am Batteriesatz anliegt und welche Ladespannung erreicht wurde. In Abhängigkeit von diesen beiden Werten wird dann entweder die Schnelladung fortgesetzt oder die Ladung abgebrochen (wenn z. B. aufgrund fehlerhafter Umstände die maximal zulässige Temperatur erreicht wurde).

In einer zweiten Ausführungsform der vorliegenden Erfindung wird das Verfahren derart betrieben, daß nicht impulsweise aufgeladen wird, sondern daß mit einem Konstantstrom (ohne Unterbrechung) aufgeladen wird. Es wird dann nicht abgeschaltet, um die Batteriespannung zu messen, sondern die Batteriespannung wird kontinuierlich während der Aufladung mitgemessen. Nachdem die Batteriespannung sich mit der Ladespannung proportional verändert, kann demzufolge auch die Batteriespannung auf diese Weise gemessen werden.

Erst wenn nach einem der oben genannten beiden bevorzugten Verfahren sich die Steigung (Steigung 1) der bestimmungsgemäßen Schnelladung ändert und hierbei in eine größere Steigung (Steigung 2) übergeht, ist dies ein Anzeichen dafür, daß der Batteriesatz sich im Bereich der Volladung befindet und daß nun die Ladung abgebrochen werden könnte.

Es werden weiterhin auch im Bereich des steileren Kurvenastes (Steigung 2) impulsweise nach dem erstgenannten Verfahren die Batteriespannungen gemessen und sobald die vorher erwähnte Steigungsänderung festgestellt wird, wird nach etwa vier weiteren Messungen und Aufladungen von 16 Sec. Dauer die Schnelladung abgebrochen und der Ladestrom wird stufenweise verringert, um z. B. sieben Stufen mit jeweils wiederum 16 Sec. Dauer. Der Ladestrom wird z. B. von einem maximalen Wert von 6 A in einer beliebigen Anzahl von Stufen erniedrigt, wobei in einem bevorzugten Ausführungsbeispiel etwa sieben Stufen von jeweils 16 Sec. Dauer verwendet werden, um den maximalen Ladestrom von z. B. 6 A auf einen niedrigeren Strom von 70 mA zu erniedrigen. Damit ist die Ladung vollständig abgebrochen und man befindet sich jetzt im Erhaltungsmodus, d.h. es findet jetzt nachfolgend nur noch eine Erhaltungsladung statt.

In einer bevorzugten Ausführungsform der vorliegenden Erfindung besteht diese Erhaltungsladung darin, daß einmal in einer Stunde ein Impul von 6 A auf den Batteriesatz gegeben wird. Damit ist eine beliebig lange Aufbewahrung des Batteriesatzes im Ladegerät möglich, ohne daß sich der Batteriesatz im Ladegerät unbeabsichtigt entlädt. Während dieser Erhaltungsladung findet weiterhin die Temperaturmessung statt und ebenso die Messung der Batteriespannung. Damit ist sichergestellt, daß stets eine vollgeladene Batterie in dem Netzgerät aufbewahrt wird, ohne daß sich diese Batterie entlädt, d. h. eine derartige Batterie kann auch nach etwa einer Woche oder länger aus dem Ladegerät entnommen werden und liegt dann in stets vollgeladenem Zustand vor.

In einer bevorzugten Weiterbildung des vorliegenden Verfahrens ist es im übrigen vorgesehen, daß auch der Temperaturfühler, der sich in Körperkontakt mit dem Batteriesatz befindet, auf Kurzschluß und Unterbrechung überprüft wird, um eine Beschädigung des Temperaturfühlers zu erkennen. Nur bei dieser Überwachung des Temperaturfühlers wird eine sichere Funktion des Gerätes gewährleistet.

In einer Weiterbildung des vorstehend beschriebenen Verfahrens wird die Betriebssicherheit des beschriebenen Verfahrens noch dadurch erhöht, daß nicht nur allein die Steigungsänderung als Kriterium für die Abschaltung der Schnelladung verwendet wird, sondern es werden zusätzlich noch weitere Kriterien für die Abschaltung verwendet.

Stellt sich z. B. bei der Steilheitsmessung heraus, daß die Temperatur am Batteriesatz in unzulässiger Weise ansteigt, wird bereits schon aufgrund dieses Temperaturkriteriums die Schnelladung abgebrochen.

Stellt sich bei einem anderen unzulässigen Betriebszustand heraus, daß z. B. eine bereits schon vollgeladene Batterie in das Ladegerät eingesetzt wurde, dann kann nicht mehr eine Steigungsänderung der Ladespannung erfaßt werden. Um nun Fehlfunktionen des Gerätes auszuschalten, wird die sogenannte Delta U-Messung durchgeführt, d.h. es wird festgestellt, ob die Ladespannung sich nicht stufenweise über die Zeit hinweg gesehen erniedrigt. Wird eine derartige Erniedrigung der Ladespannung mit zunehmer Ladezeit festgestellt, dann wird ebenfalls die Aufladung abgebrochen, um eine überladung zu vermeiden.

Der bereits vollgeladene Batteriesatz braucht dann nicht mehr weiter aufgeladen zu werden und es wird dann sofort auf Erhaltungsladung umgeschaltet.

Ein weiteres Sicherheitskriterium des beschriebenen Verfahrens besteht darin, daß auch unzulässige Überspannungen erkannt werden. Wenn beispielsweise ein Zellenbruch einer Zelle oder mehrerer Zellen im Batteriesatz stattfindet, dann steigt die Ausgangsspannung des Ladegerätes in unzulässiger Weise an und eine derartige Überspannung wird erkannt und ebenfalls zur Abschaltung der Schnelladung verwendet.

Gleiches gilt im übrigen bei Feststellen eines Überstromes. Wenn ein Kurzschluß in einer oder mehrerer der Zellen des Batteriesatzes passieren sollte, würde mit einem Überstrom geladen werden, was ebenfalls zu einer Beschädigung des Batteriesatzes führt. Ein derartiger Überstrom wird ebenfalls vom Ladegerät erkannt und führt somit zu einer Abschaltung der Schnelladung.

Nach einer Weiterbildung der vorliegenden Erfindung findet noch eine sogenannte Plausibilitätsprüfung statt, d. h. es wird eine Grenze für die maximale Ladezeit vorgegeben. Diese Grenze ist dann wichtig, wenn ein völlig defekter Batteriesatz aufgeladen werden soll, der nicht mehr ladefähig ist. Um zu vermeiden, daß ein derartiger Batteriesatz für eine längere Zeit mit einem Schnelladestrom beaufschlagt wird, ist erfindungsgemäß vorgesehen, daß die Schnelladung nach einer Zeitdauer von z. B. 20 bis 30 Minuten abgebrochen wird, wobei vorausgesetzt wird, daß eine bestimmungsgemäße Aufladung im Bereich von 10 Minuten stattfindet.

Ein weiteres wesentliches Merkmal der vorliegenden Erfindung ist, daß das erfindungsgemäße Ladegerät eine sogenannte Netzausfall-Überbrückung für eine Dauer von bis zu 2 Sec. aufweist. Damit ist der Vorteil verbunden, daß der im Ladegerät enthaltene Mikroprozessor bei Netzausfall nicht einen Reset ausführt und damit die Ladung nach dem erfindungsgemäßen verfahren wieder von vorne beginnt

4

EP 0 526 874 A2

(stufenweise Erhöhung des Ladestroms, Messung der Steigung 1, Anlegen von entsprechenden Ladeimpulsen usw.), sondern das Gerät vermeidet diesen Reset und der Mikroprozessor erkennt den Zeitpunkt des Netzausfalls und führt in seinem eingespeicherten Programm das Messverfahren weiter an der Stelle, wo der Netzausfall stattfand.

Damit haben Netzspannungsschwankungen ebenfalls keinen Einfluß auf die Ladung.

Im übrigen besteht der Vorteil einer stufenweise Erhöhung des Ladestroms bei Beginn der Aufladung darin, daß die Kontakte des Batteriesatzes geschont werden, wenn sie zum Aufladen in das Netzgerät eingesetzt werden.

Ein Gerät nach der vorliegenden Erfindung ist dadurch gekennzeichnet, daß es ausgehend von einem netzseitig angeordneten Gleichrichterteil die gleichgerichtete Spannung in einen Leistungsteil einspeist, welches von einer Pulsweitenmodulation angesteuert wird. Die Pulsweitenmodulation ihrerseits wird über eine optoelektrische Trennung von dem Prozessor angesteuert.

Damit ergibt sich ein geschaltetes Netzteil, welches den besonderen Vorteil hat, daß relativ kostengünstige Teile verwendet werden können und das Gerät selbst klein und leicht ausgebildet werden kann, weil ein aufwendiger Netztransformator entfallen kann.

Statt eines Netztransformators braucht nämlich nur ein kleiner Übertrager verwendet werden, was die Abmessungen des Gerätes wesentlich vermindert. Der Schaltmessteil arbeitet bevorzugt mit einer Schaltfrequenz von 70 kHz. Dieses Hochfrequenzsignal wird an der Sekundärseite dieses Übertragers in einfacher Weise gleichgerichtet und wird dann unmittelbar zur Aufladung des Batteriesatzes verwendet.

Der Mikroprozessor ist mit einem AD-Wandler gekoppelt und erfaßt über einen Spannungssensor (U-Sensor) die Batteriespannung, ferner liegt ein Temperatursensor an einem anderen Eingang des AD-Wandlers an und im übrigen noch ein Stromsensor, der den Batteriestrom erfaßt.

Die drei Meßgrößen werden als Ansteuersignale für den digitalen Prozessor verwendet, der seinerseits aufgrund eines eingegebenen Programmes über den vorher erwähnten Optokoppler die Pulsweitenmodulation steuert, die ihrerseits das geschaltete Netzteil ansteuert.

Entsprechend den Prozessorsignalen wird somit die Pulsweite modifiziert und somit wird die Leistung des Leistungsteiles verändert.

Zusammengefaßt werden nachfolgend die wesentlichen Merkmale des vorliegenden Verfahrens und eines nach dem Verfahren arbeitenden Ladegerätes dargestellt:

- Überwachung der Temperatur des Akkupacks vor Beginn und während der Ladung
- Überwachung des Temperaturfühlers auf Kurzschluß und Unterbrechung
- Überwachung des Ladespannungsverlaufes während der Ladung.
- Ladung mit reduziertem Ladestrom zu Beginn der Ladung. Schnelladung mit Konstantstrom, sowie reduziertem Ladestrom in der Schlußphase der Schnelladung.
- sicheres Abschalten der Schnelladung nach der vollständigen Ladung. Durch sechs unabhängige Abschaltverfahren: Steilheitsmessung, -delta U, Temperatur, Überspannung, Überstrom, Ladezeitbegrenzung.
- Erhaltensladung des vollen Akkus mittels Dauerstrom und Formierungsimpuls.
- Netzausfallüberbrückung bis zu 2 Sec.. Netzspannungsschwankungen haben keinen Einfluß auf die Ladung
- Kontaktschonung beim Einsetzen des Akkupacks durch verzögertes Ladestromaufschalten
- Ausgabe der Zustände an den Anwender über LED's oder über ein Display.

Durch den Einsatz von modernsten Technologien ist es nun gelungen, all diese Forderungen an ein Ladegerät auf kleinstem Raum und zu einem bislang nicht möglichen Preis zu verwirklichen. Die Erfindung setzt bei diesem Produkt eine Kombination aus Schaltnetzteil und Mikroprozessortechnik ein.

Folgende Daten werden hierbei erreicht:

Alle weiteren Daten beziehen sich auf einen 9,6 Volt, 0,8 Ah Block.

- Die Ladezeit eines normalentladenen Akkupacks beträgt acht Minuten. Ein tiefentladener Akkupack wird in ca. zehn Minuten vollgeladen. Die Erfindung erreicht eine Einladung bis zu 90% der Zellenkapazität.
- Ladetemperaturbereich: Akkupacktemperatur + 5° bis 60° C. Außerhalb dieses Bereiches wird keine Schnelladung vorgenommen. Unter 5° C wird mit stark reduziertem Ladestrom angeladen, bis + 5° C erreicht werden, dann erfolgt automatisch eine Schnelladung. Über + 60° C wird keine Ladung vorgenommen, bis sich der Pack auf + 55° C abgekühlt hat. Die Akkupacktemperatur wird über einen Ntc-Wid. im Akkupack ermittelt. Werden während der Ladung + 60° C überschritten, wird die Ladung sofort unterbrochen. Dies ist aber nur eine Schutzfunktion, denn diese Temperatur wird durch

5

ein neuartiges Ladeverfahren normalerweise nie erreicht.

Der Ladestrom beträgt zu Beginn der Ladung konsant 6 Amp. Die Ladespannung richtet sich automatisch nach der Anzahl der eingesetzten Zellen. Die Ladespannung liegt netzgetrennt an den Akkusteckkontakten an. (VDE 0805).

Zur Erzeugung des Ladestromes wird ein Schaltnetzteil verwendet. Es handelt sich um einen primärgetakteten Sperrwandler (Flyback-Wandler). Dieses Schaltnetzteil wird von einem auf der Sekundärseite liegenden Mikrokontroller geregelt.

Der Wirkungsgrad der Schaltung liegt bei ca. 78%. Die Leistungsaufnahme im Akkupufferbetrieb ist 2W/h.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Alle in den Unterlagen - einschließlich der Zusammenfassung - offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellende Zeichnungen näher erläutert. Hierbei gehen aus den Zeichnungen und ihrer Beschreibung weitere erfindungswesentliche Merkmale und Vorteile der Erfindung hervor.

Es zeigen:

Figur 1: Blockschaltbild einer Vorrichtung nach der Erfindung;
Figur 2: Programmschema der Steigungsmessung;
Figur 3: Ladespannungsverlauf über die Zeit gemessen.

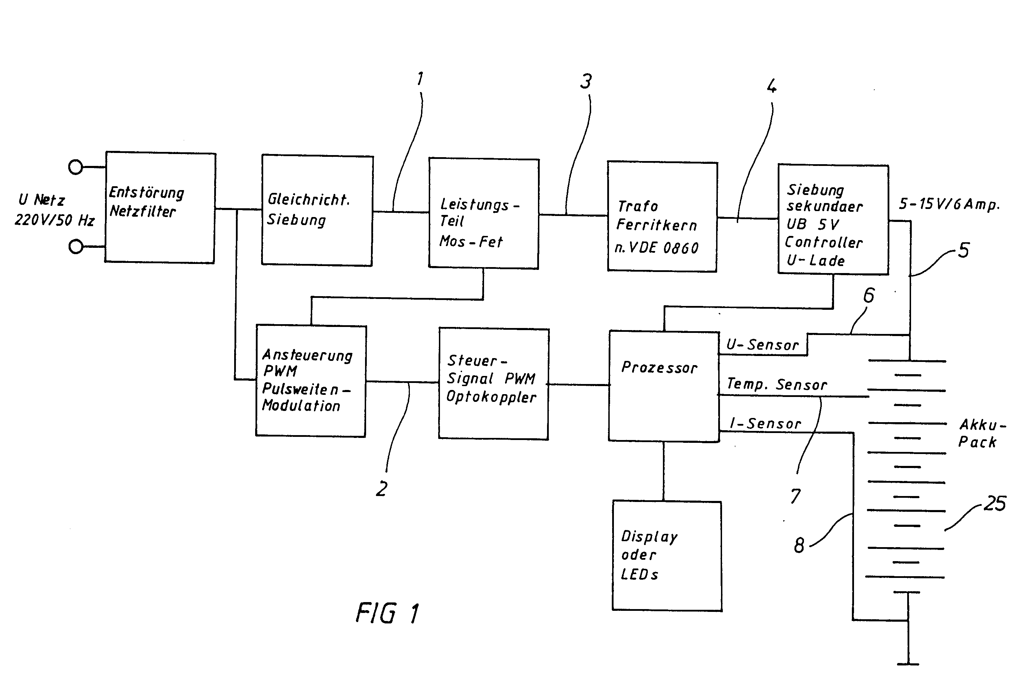

Gemäß Figur 1 wird der Netzstrom nach dem Passieren eines Netzfilters in einen Gleichrichterteil gleichgerichtet und gleichzeitig gesiebt. Die dadurch gewonnene Gleichspannung wird über die Leitung 1 einem Leistungsteil eingespeist, welches im wesentlichen aus einem FET-Transistor besteht. Dieser Transistor wird an seinem Gate von einer Pulsweitenmodulationsschaltung angesteuert, welche Pulsweitenmodulation über die Leitung 2 von einem Optokoppler angesteuert wird, der seinerseits von dem Prozessor beaufschlagt wird.

Der Prozessor gibt also die Pulsweite vor und entsprechend dieser Pulsweite wird der Leistungsteil angesteuert und gibt einen mehr oder weniger lang dauernden Strom über die Leitung 3 auf einen Transformator.

Auf der Leitung 3 herrscht hierbei eine Frequenz von bevorzugt 7 kHz.

Auf der Sekundärseite des Transformators wird das erhaltene Hochfrequenzsignal über die Leitung 4 einer Siebung und Gleichrichtung unterworfen, wo eine Spannung von im Bereich zwischen 5 bis 15 Volt und bevorzugt 6 Amp Stromstärke erreicht wird. An der Leitung 5 liegt dann der Batteriesatz an, der an seinem anderen Ende auf Massepotential liegt.

Wichtig ist, daß über die Leitung 6 die Spannung des Batteriesatzes abgegriffen wird, über die Leitung 7 die Temperatur des Batteriesatzes erfaßt wird und über die Leitung 8 der Ladestrom am Batteriesatz erfaßt wird.

Die Funktionszustände des Prozessors (Ladung, Ladung unterbrochen, Fehlladung usw.) können an einem Display angezeigt werden.

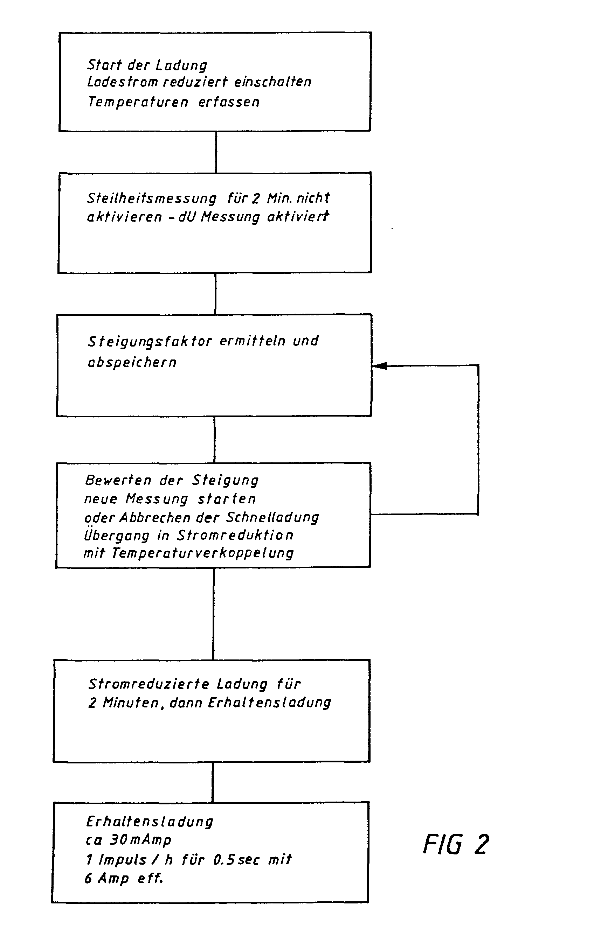

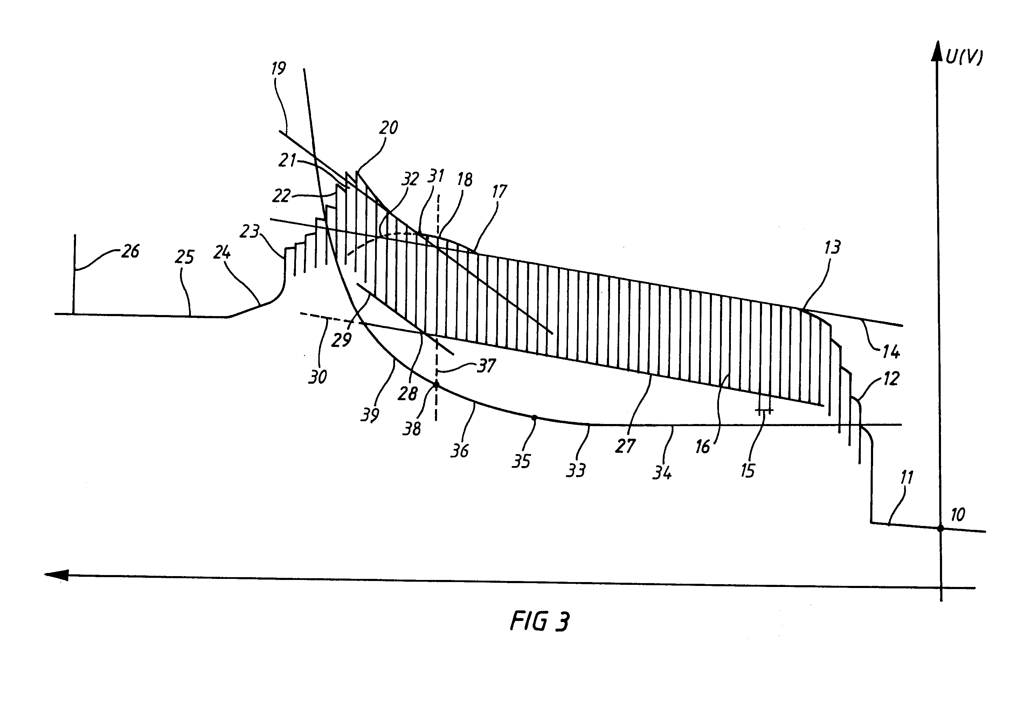

Die Figur 2 zeigt in Verbindung mit Figur 3 das erfindungsgemäße Verfahren.

Die Ladung beginnt zum Zeitpunkt 10 mit einem Ladestrom 11 relativ geringer Größe, wobei erfindungsgemäß dieser Ladestrom in einer Mehrzahlen von Stufen 12 erhöht wird, bis der maximale Ladestrom bei Position 13 erreicht wird. Gleichzeitig findet jetzt eine Steigungsmessung statt, wobei die Steigung 1 (14) nun ständig von dem Gerät erfaßt wird. Dies ergibt sich in Figur 2 aus dem zweiten Block des dort dargestellten Programmschemas.

In Impulsen von z. B. 16 Sec. Dauer wird nun jeweils der Ladestrom mit dem maximal möglichen Wert an den Batteriesatz angelegt, wobei für jeweils einen Impuls 16 von z. B. 0,5 Sec. Dauer die Aufladung unterbrochen wird und anstelle der Aufladung nun über die Leitung 6 die Batteriespannung, über die Leitung 7 die Batterietemperatur und über die Leitung 8 der Batteriestrom gemessen wird. Wenn sich die Batteriespannung immer noch im Bereich der Steigung 1 (Kurve 14) bewegt, wird weiter aufgeladen, wie dies durch den Kurvenast 14 in Figur 3 dargestellt ist.

Erst bei Position 17 wird nach Durchlaufen einer bestimmten Ladezeit von z. B. 10 Minuten von der erfindungsgemäßen Schaltung festgestellt, daß nun die Ladespannung ansteigt und hierbei in den Kurvenast 18 übergeht.

Das neue Verfahren liegt nun darin, daß die Steigung 14 ständig aus einer Vielzahl von Messungen bestimmt wird, wobei eine Durchschnittssteigung ermittelt wird.

Wen diese Durchschnittssteigung von Meßwerten nummehr als das doppelte der vorhergehenden Meßwerte auf der Kurve 14 überschritten wird, dann wird festgestellt, daß bei Pos. 17 eine andere Steigung erreicht wurde. Es handelt sich also um ein adaptives Meßverfahren, bei dem nicht Absolut-Werte zur Verringerung des Ladestromes herangezogen werden, sondern es handelt sich um ein lernfähiges System. Es hat sich nämlich herausgestellt, daß die Steigung 14 selbst abhängig ist von dem Zustand unterschiedlicher Batteriepacks und Typen und daher ist es ungünstig, von einem Absolut-Wert auszugehen, der nur für eine bestimmte Art von Batteriepacks gilt; es ist deshalb besser, ein derartiges adaptives Verfahren zu wählen.

Dies ist das erste Merkmal der Erfindung, daß nämlich ein adaptives Meßverfahren zur Bestimmung der oberen Steigung 14 herangezogen werden soll.

In einer weiteren Erweiterung der Erfindung ist nun vorgesehen, daß auch eine untere Steigung gemessen wird, wobei die Steigung 14 dem Ladespannungsverlauf mit eingeschaltetem Ladestrom entspricht, während die Steigung 27 den Leerlaufspannungsverlauf darstellt, d.h. also bei einem Ladestrom gleich Null.

Die Steigung 27 gibt den Leerlaufzustand der gesamten Schaltung wieder, während die Steigung 14 den Lastverlauf der Schaltung wiedergibt.

Es hat sich gezeigt, daß auch das Verhalten der Leerlaufkurve (Steigung 27) für die Abschaltung des Ladestromes verwendet werden kann, und zwar ist es günstig, diejenige Steigung 14 oder 27 zu nehmen, welche früher in einen Kurvenast größerer Steilheit übergeht.

Wenn z. B. die aufzuladende Zelle sehr heiß wird und der Gasdruck sehr stark ansteigt, kann es vorkommen, daß der obere Ladekurvenverlauf bei der Steigung 14 nicht mehr eindeutig genug in eine Kurve größerer Steilheit übergeht, um so die Schaltung zu einer Abschaltung des Ladestromes zu veranlassen.

Um dies zu vermeiden, wird deshalb auch die untere Steigung 27, die den Leerlauf der Schaltung wiedergibt, zur Abschaltung des Ladestromes herangezogen und je nachdem, welche Kurve (entweder die Steigung 14 oder die Steigung 27) in eine Kurve größerer Steilheit übergeht, wird dieser erste, frühere Übergang zum Abschalten des Ladestromes verwendet.

Es hat sich nun in einer weiteren Fortbildung der Erfindung herausgestellt, daß der Unterschied zwischen der Pos. 17 (Übergang in den Kurvenast 18) im Vergleich zu der Pos. 28 (Kurvenübergang der Steigung 27) in den Kurvenast 29 ebenfalls zur Bildung weiterer Kriterien zur Beurteilung des Ladezustandes eines Akkupacks herangezogen werden kann.

Liegt nämlich ein Akkupack vor, der nahezu voll geladen ist und der in das Gerät eingesetzt wird, dann kann die Steigung 14 nicht ermittelt werden, stattdessen wird bereits schon die Kurve 19 größerer Steilheit durch die Meßschaltung ermittelt und errechnet; man wäre also mit einem voll geladenen Akkupack im Bereich des Kurvenastes 18 oder der Kurve 19.

Nun hat sich herausgestellt, daß in diesem Bereich (vertikal in Figur 3 nach unten gelotet) die Steigung 27 noch gerade verläuft, ohne in eine Kurve größerer Steilheit überzugehen.

Bei einem voll geladenen Akkupack stellt sich also heraus, daß die untere Steigung 27 bei Pos. 28 nicht in den steileren Kurvenast 29 übergeht, sondern sich in dem nahezu gleichen eine gleiche Steigung aufweisenden Kurvenast 30 fortsetzt.

Erfindungsgemäß wird nun der Unterschied der Steigung zwischen dem Kurvenast 19 und dem Kurvenast 30 zur Abschaltung eines voll geladenen Akkupacks herangezogen. Wenn also der Wert der Steigung der Kurve 19 ein vielfaches größer ist als der Wert der Steigung des Kurvenastes 30, so wird dies als Kriterium für das Vorliegen eines voll geladenen Akkupacks herangezogen und der Ladestrom wird abgeschaltet.

Vorhin wurde ausgeführt, daß auf der Kurve 14 Durchschnittswerte ermittelt werden, um so adaptiv die Steigung der Kurve 14 festzustellen.

Ebenso werden derartige Durchschnittswerte im Bereich des Kurvenastes 18 festgestellt.

Zum Abschalten führt nun eine dreimalige Überschreitung des Mittelwertes der Kurve 14, weil man dann davon ausgehen kann, daß man sich im Bereich des Kurvenastes 18 bewegt.

Wenn aber der Mittelwert der Steigung 14 nur zweimal überschritten wird und nicht dreimal, dann wird dieses Kriterium (zweimalige Überschreitung des Mittelwertes der Steigung der Kurve 14) nicht mehr für die Abschaltung benutzt, denn dann besteht der Verdacht, daß der Kurvenast 18 nicht stetig ansteigt, sondern daß es sich dann in diesem Fall um eine unstetige, sich in ihrer Steigung wieder vermindernde Kurve handelt, die demzufolge nicht für die Abschaltung des Ladestroms unmittelbar herangezogen werden kann. Es gibt nämlich bestimmte Typen von Akkupacks, die keinen ausgeprägten Kurvenast 18 herausbilden, sondern die nur eine Art von Umkehrpunkt im Bereich des Kurvenastes 18 ausbilden und es muß daher ein anderes Kriterium für die Abschaltung verwendet werden. Dieses Kriterium liegt darin, daß nach dem Erkennen von einer zweimaligen, positiven Überschreitung der Steigung der Kurve 14 (ein drittes Mal wurde nicht mehr innerhalb der Meßzeit erkannt) daß dann der dritte Meßwert als negativer Meßwert gemessen wird. Somit ist festgestellt, daß es sich bei der Kurve 18 um keine Gerade handelt, sondern um eine Kurve mit einem Umkehrpunkt. Sobald der dritte Meßwert negativ in seiner Steigung gegenüber der Steigung der Kurve 14 wird, wird sofort nach dem Erreichen des dritten (negativen Wertes) der Ladestrom abgeschaltet.

Es wurden also vorstehend vier verschiedene Kriterien zur Abschaltung des Ladestroms im Sinne der vorliegenden Erfindung geschildert. Die Priorität dieser Kriterien ist gleich, d.h. wenn eines der Kriterien erkannt wurde innerhalb der Meßzeit, wird dies für die Abschaltung des Ladestroms herangezogen.

Die oben geschilderten Verhältnisse, daß die Steigung des Kurvenastes 18 negativ wird, wurde in Figur 3 eingetragen. Hier wird vorausgesetzt, daß nach dem Durchlaufen des Kurvenastes 18 bei Pos. 31 sich ein Kurvenast 32 mit negativer Steigung anschließt.

Eine Abschaltung wird dann erzeugt, wenn zwei positive Steigungen auf dem Kurvenast 18 festgestellt wurden und mindestens eine negative Steigung im Bereich des Kurvenastes 32.

Die letzt beschriebene Maßnahme führt also dazu, einen voll geladenen Akku vor Überladung zu schützen, denn bei einem voll geladenen Akku wird der Kurvenast 18 sofort in negative Werte nach Pos. 31 in den Kurvenast 32 übergehen und dies wird dann als Sofort-Abschalt-Kriterium für einen voll geladenen Akku verwendet.

Als weiteres Kriterium für die Abschaltung wird der Temperaturverlauf des Akkupacks verwendet. Der Temperaturverlauf ist mit der Temperaturkurve 33 in Figur 3 dargestellt. Vom Beginn der Ladung aus ist der Temperaturverlauf in dem Kurvenast 34 negativ, d.h. die Temperatur fällt zunächst leicht ab. Etwa ab Pos. 35 steigt die Temperatur leicht an und geht in den Kurvenast 36 über, der als leicht geschwungene Kurve die ansteigende Temperatur angibt.

Die Temperatur des Akkupacks wird nun insoweit in die Messung mit einbezogen, als daß bei dem Erkennen des Kurvenastes 18 eine Gerade 37 gebildet wird, d.h. in diesem Zeitpunkt wird bei Pos. 38 die Temperatur im Bereich des Kurvenastes 36 erfaßt.

Ab Pos. 36 werden dann im Bereich des sich daran anschließenden Kurvenastes 39 eine Reihe von Steilheitsmessungen im Bereich des Kurvenastes 39 durchgeführt. Wenn nun im Bereich der aufeinanderfolgenden Meßpunkte die Steigung der zuerst gemessenen Kurve im Vergleich zu der Steigung der darauf folgend gemessenen Kurve sehr stark abweicht um einen bestimmten Temperaturunterschiedswert, wird dies ebenfalls als Kriterium für die Schnellabschaltung verwendet.

Dieses Kriterium der Temperatur des Akkupacks ist ist gleichwertig zu den anderen Kriterien zur Schnellabschaltung des Ladestromes, d.h. also, wenn ein bestimmtes Delta t im Bereich des Kurvenastes 39 überschritten wird, wird dies als Kriterium für die Schnellabschaltung herangezogen.

Es werden also keine absoluten Delta-t-Werte ausgewertet, sondern die Differenz von Steigungswerten im Bereich der Temperaturkurve 33, nämlich im Bereich des Kurvenastes 39.

| ZEICHNUNGS-LEGENDE | | | |
|---|---|---|---|
| 1 | Leitung | 27 | Steigung |
| 2 | " | 28 | Position |
| 3 | " | 29 | Kurvenast |
| 4 | " | 30 | Kurvenast |
| 5 | " | 31 | Position |
| 6 | " | 32 | Kurvenast |
| 7 | " | 33 | Temperaturkurve |
| 8 | " | 34 | Kurvenast |
| | | 35 | Position |
| 10 | Zeitpunkt | 36 | Kurvenast |
| 11 | Ladestrom | 37 | Gerade |
| 12 | Stufe | 38 | Position |
| 13 | Position | 39 | Kurvenast |
| 14 | Steigung | | |
| 16 | Impuls | | |
| 17 | Position | | |
| 18 | Kurvenast | | |
| 19 | Kurve | | |
| 20 | Position | | |
| 21 | Stufe | | |
| 22 | " | | |
| 23 | " | | |
| 24 | Kurvenast | | |
| 25 | Batteriesatz | | |
| 26 | Formierungsimpuls | | |

**Patentansprüche**

1. Verfahren zum Wiederaufladen von aufladbaren Batterien (Akku) mit einem Ladegerät bei dem der Zeitpunkt für die Abschaltung des Ladestromes zum Schutz gegen Überladung durch Messung und Bewertung der am Batteriesatz anliegenden Ladespannung (Batteriespannung) erfolgt, wobei vom Beginn (Position 13) der Ladung die Steigung (14) der Ladespannung gemessen wird, und daß ein Ansteigen (Position 17) der Ladespannung zum Ende der Aufladung hin als Änderung der gemessenen Steigung (Kurve 19) erfaßt wird und die Schnelladung beendet wird, **dadurch gekennzeichnet**, daß am Akku in zeitgleichen Abständen folgende Meßwerte erfaßt werden:
   1. Ladespannung mit Ladestrom (unter Last)
   2. Ladespannung ohne Ladestrom (Leerlauf)
   3. Temperatur des Akkus,
   daß mindestene für die ersten beiden Kurven der Steigungsfaktor (Steilheit) errechnet wird und daß, wenn mindestens nochmals hintereinander eine positive Steigung von mehr als das doppelte des Mittelwertes der vorangegangenen Messung gemessen wird, die Schnelladung beendet wird.

2. Verfahren nach Anspruch 1, **dadurch gekennzeichnet**, daß, wenn mehrmals hintereinander negative Werte des Steigungsfaktors gemessen wird, die Schnelladung beendet wird (Fall eines vollgeladenen Akkus).

3. Verfahren nach Anspruch 1 oder 2, **dadurch gekennzeichnet**, daß der Steigungsfaktor durch Aufsummieren der gemessenen Spannungsänderungen, sowie durch die Anzahl der gemessenen Spannungsänderungen ermittelt wird.

4. Verfahren nach einem der Ansprüche 1 bis 3, **dadurch gekennzeichnet**, daß die Spannungssteigungsänderung als Differenz zwischen der Durchschnittssteigung und der momentanen Steigung ermittelt wird.

5. Verfahren nach einem der Ansprüche 1 bis 4, **dadurch gekennzeichnet**, daß jede Spannungssteigungsänderung, die doppelt so hoch ist wie der berechnete Durchschnitt als positive Steigung gewertet wird und daß, wenn zwei positive Steigungsänderungen hintereinander ermittelt werden, das Kriterium zur Erfassung einer negativen Steigungserkennung verschärft wird.

6. Verfahren nach Anspruch 5, **dadurch gekennzeichnet**, daß eine verschärfte negative Steigungserkennung dadurch durchgeführt wird, daß, wenn zweimal ein Meßwert ermittelt wurde, der größer als das doppelte des berechneten Mittelwertes war und wenn danach negative Steigungswerte gemessen werden, daß dann die Schnelladung abgebrochen wird.

7. Verfahren nach einem der Ansprüche 1 bis 5, **dadurch gekennzeichnet**, daß zum Schutz eines bereits voll geladenen Akkus gegen erneutes Laden die Steigungen der beiden Spannungskurven unter Last und im Leerlauf pro Zeiteinheit voneinander subtrahiert werden, und daß, wenn die Lastspannungskurve um den Faktor 3 schneller steigt als die Leerlaufspannungskurve, die Schnelladung beendet wird.

8. Verfahren nach einem der Ansprüche 1 bis 7, **dadurch gekennzeichnet**, daß in einem ersten Verfahrensschritt zu Beginn der Ladung die Temperatur des Batteriesatzes (25) erfaßt wird und daß
   a) bei einer Temperatur im Bereich unter + 5° C zunächst eine Formierungsladung stattfindet bis die Temperatur über + 5° C ansteigt
   b) bei einer Temperatur über + 5° C die Schnelladung beginnt
   c) bei einer Temperatur über + 60° C die Schnelladung abgebrochen wird.

9. Verfahren nach Anspruch 8, **dadurch gekennzeichnet**, daß in einem zweiten Verfahrensschritt - nach erfolgter Temperaturmessung - bei einer Temperatur im Bereich zwischen + 5° C und + 60° C die Schnelladung reduziert stufenweise eingeleitet wird, indem ausgehend von einem niedrigen Ladestrom (11) dieser Ladestrom stufenweise bis zum Erreichen des maximalen Ladestromes Position 13) erhöht wird.

10. Verfahren nach Anspruch 9, **dadurch gekennzeichnet**, daß in einem dritten Verfahrensschritt - nach erfolgter reduzierter Schnelladung - die Schnelladung impulsweise für eine bestimmte Impulsdauer erfolgt, daß am Ende der Impulsdauer die Schnelladung unterbrochen wird und die Ladespannung und der Ladestrom für eine kurze Impulsdauer gemessen werden und daß dann die Schnelladung für die nächste längere Impulsdauer festgesetzt wird.

11. Verfahren nach Anspruch 9, **dadurch gekennzeichnet**, daß in dem dritten Verfahrensschritt die Schnelladung kontinuierlich und unterbrechungsfrei erfolgt und daß während der Schnelladung die Ladespannung und der Ladestrom erfaßt werden.

12. Verfahren nach einem der Ansprüche 10 oder 11, **dadurch gekennzeichnet**, daß in einem vierten Verfahrensschritt nach Erfassung der Ladespannungsänderung (Steigung 2) noch über eine kurze Zeit schnellgeladen wird, bis die Schnelladung abgebrochen wird.

13. Verfahren nach Anspruch 12, **dadurch gekennzeichnet**, daß nach dem Abbruch der Schnelladung der Ladestrom stufenweise verringert wird und daß danach eine Erhaltungsladung stattfindet.

14. Verfahren nach einem der Ansprüche 1 bis 13, **dadurch gekennzeichnet**, daß zum Schutz eines defekten Batteriesatzes (25) noch folgende weitere Meßgrößen für den Abbruch der Schnelladung verwendet werden:
   a) Delta-U-Messung mit Überprüfung, ob sich die Ladespannung über differentiell kurze Beobachtungszeiten der Ladezeit nicht erniedrigt
   b) Erkennen eines vollgeladenen Batteriesatzes (25)
   c) Erfassung einer unzulässig hohen Ladespannung
   d) Erfassung eines unzulässig hohen Ladestromes
   e) Überschreitung der bestimmungsgemäßen Ladezeit.

15. Vorrichtung zur Ausübung des Verfahrens nach einem der Ansprüche 1 bis 14, **dadurch gekennzeichnet**, daß zur Erzeugung des Ladestromes ein Schaltnetzteil verwendet wird, das als primärgetakteter Sperrwandler (Flyback-Wandler) ausgebildet ist und das Schaltnetzteil von einem auf der Sekundärseite des Sperrwandlers angeordneten Prozessor geregelt wird, der als Regelgrößen die Temperatur am Batteriesatz (25), die Ladespannung und den Ladestrom erfaßt.

16. Vorrichtung nach Anspruch 15, **dadurch gekennzeichnet**, daß das Schaltnetzteil einen Leistungsteil mit einem MOS-FET aufweist, dessen Durchschaltzeit pulsweitenmoduliert ist, und daß die Pulsweite von dem Prozessor erzeugt wird.

FIG 1

U Netz
220V/50 Hz

Entstörung
Netzfilter

Gleichricht.
Siebung

Leistungs-
Teil
Mos-Fet

Trafo
Ferritkern
n. VDE 0860

Siebung
sekundaer
UB 5V
Controller
U-Lade

5-15V/6Amp.

Ansteuerung
PWM
Pulsweiten-
Modulation

Steuer-
Signal PWM
Optokoppler

Prozessor

U-Sensor

Temp. Sensor

I-Sensor

Display
oder
LEDs

Akku-
Pack

EP 0 526 874 A2

Start der Ladung
Ladestrom reduziert einschalten
Temperaturen erfassen

Steilheitsmessung für 2 Min. nicht
aktivieren - dU Messung aktiviert

Steigungsfaktor ermitteln und
abspeichern

Bewerten der Steigung
neue Messung starten
oder Abbrechen der Schnelladung
Übergang in Stromreduktion
mit Temperaturverkoppelung

Stromreduzierte Ladung für
2 Minuten, dann Erhaltensladung

Erhaltensladung
ca 30 mAmp
1 Impuls / h für 0.5 sec mit
6 Amp eff.

FIG 2

EP 0 526 874 A2

U(V)

FIG 3